# EUROPÄISCHE PATENTSCHRIFT

(11) **EP 3 140 237 B1**
(45) Veröffentlichungstag und Bekanntmachung des Hinweises auf die Patenterteilung: **10.04.2019**
(21) Anmeldenummer: 15720068.4
(22) Anmeldetag: 29.04.2015
(51) Int. Cl.: B66C 1/66, B60P 7/08

(54) **RINGELEMENT MIT EINEM GETEILTEN SOCKEL FÜR EIN ZURR- ODER ANSCHLAGMITTEL**
RING ELEMENT HAVING A DIVIDED BASE FOR A LASHING OR ATTACHMENT MEANS
ÉLÉMENT ANNULAIRE MUNI D'UN SOCLE FRACTIONNÉ POUR UN MOYEN D'AMARRAGE OU D'ACCROCHAGE

(30) Priorität: 09.05.2014 DE 102014208819
(43) Veröffentlichungstag der Anmeldung: 15.03.2017
(73) Patentinhaber: RUD Ketten Rieger & Dietz GmbH u. Co. KG, 73432 Aalen (DE)
(72) Erfinder: SMETZ, Reinhard, 86720 Nördlingen-Kleinerdlingen (DE)
(74) Vertreter: Grünecker Patent- und Rechtsanwälte PartG mbB
(86) Internationale Anmeldenummer: PCT/EP2015/059395
(87) Internationale Veröffentlichungsnummer: WO 2015/169673

(56) Entgegenhaltungen:
- EP-A1- 2 412 660
- DE-U1- 20 121 118
- DE-U1- 20 121 123
- GB-A- 166 684
- US-A- 4 699 410
- US-A- 6 022 164
- US-A1- 2004 228 699

## Beschreibung

Die Erfindung betrifft ein Ringelement für ein Zurr- oder Anschlagmittel, mit einem Sockel und einem dem Sockel gegenüberliegend geschlossenen, eine Ringöffnung aufspannenden Ringabschnitt, wobei der Sockel durch einen in die Ringöffnung mündenden Anschlagkanal geteilt ist, und wobei wenigstens eine der beiden einander zugewandten Seitenwände des Anschlagkanals mit zumindest einem sich durchgängig entlang der Seitenwand erstreckenden Formschlusselement versehen ist.

Ein Ringelement mit diesen Merkmalen ist beispielsweise aus der DE 201 21 123 U1 bekannt. Am Ringabschnitt kann eine Kette, ein Seil oder ein Band angeschlagen werden. Das Ringelement wird mit seinem Sockel an einer Last fest angebracht, so dass die Last mithilfe der Kette, des Seils oder des Bandes verzurrt oder bewegt werden kann.

Andere Bauformen von Zurr- oder Anschlagmitteln sind aus der DE 85 08 172 U1, der DE 295 13 183 U1, der DE 201 21 121 U1 und der DE 10 2009 040 524 A1 bekannt. Diese Vorrichtungen haben allesamt den Nachteil, dass Kettenglieder oder Schlaufen nur mit Hilfe von Verbindungsgliedern wie Schäkel, Karabiner oder Ringösen angeschlagen werden können. Dieses Problem wird zwar durch das mit einem Gabelkopf und Sperrbolzen versehene Zurr- oder Anschlagmittel der DE 201 21 118 U1 gelöst. Für den Einsatz von Bändern oder Seilen ist dieses Zurr- oder Anschlagmittel jedoch nur eingeschränkt verwendbar. Zudem sind den seitlich übertragbaren Kräften durch das offene Gebilde des Gabelkopfes Grenzen gesetzt. Aus der US 4 699 410 A ist ein Anschlagmittel bekannt, bei dem ein Anschlussteil in einem Schlitz in einem Anschlagelement aufgenommen ist. Aus der GB 166 684 A ist ein zweiteiliger Schäkel bekannt, bei dem ein kugelförmiges Verbindungsstück eines Unterteils des Schäkels in eine komplementäre Aufnahme eines Oberteils einsetzbar ist.

Der Erfindung liegt folglich die Aufgabe zugrunde, die bekannten Zurr- oder Anschlagmittel und deren Elemente so zu verbessern, dass auch Bänder oder Seile problemlos verwendet werden und hohe Kräfte in diese eingeleitet werden können.

Die Aufgabe wird durch die Bereitstellung eines Ringelements nach dem Oberbegriff des Anspruchs 1 gelöst, wobei zusätzlich, nach dem kennzeichnenden Teils dieses Anspruchs, der Sockel des Ringelements einen Zapfen mit einem Befestigungselement aufweist.

Diese konstruktiv einfache Lösung erlaubt es, eine Schlaufe einfach durch den Sockel hindurch in die Ringöffnung einzuführen. Ist das Ringelement mit seinem Sockel an der Last oder an einem Zurrmittel befestigt, ist die Ringöffnung automatisch verschlossen und das Seil oder das Band im Ringabschnitt gesichert. Der Sockel dient zusätzlich zur Kraftübertragung. Das erfindungsgemäße Ringelement erlaubt insbesondere die Verwendung von Rundschlingen aus Textilmaterial, die aufgrund neuer hochfester textiler Werkstoffe wie ultrahochmolekulargewichtiges Polyethylen (UHMWPE) bisherige metallische Verbindungsglieder ersetzen können. Auch starre Ringglieder können durch den Anschlagkanal in die Ringöffnung eingeführt werden.

Diese Lösung kann durch die folgenden, jeweils für sich vorteilhaften und unabhängig miteinander kombinierbaren Merkmale weiter verbessert werden.

So kann gemäß einer ersten Ausgestaltung wenigstens eine Umfangsfläche des Sockels im Querschnitt wenigstens abschnittsweise kreisförmig sein. Der Querschnitt liegt vorzugsweise senkrecht zu der Ebene der Ringöffnung. Die ringförmige Umfangsfläche kann als Zentrierfläche dienen, mit deren Hilfe der Sockel in einer lastseitigen Bohrung ausgerichtet wird. Die ringförmige Umfangsfläche erlaubt zudem eine drehbare Lagerung des Sockels beispielsweise mittels eines Gleitlagers oder eines Wälzlagers. Die ringförmige Umfangsfläche kann sich unmittelbar unterhalb des Ringabschnittes befinden und/oder vom Ringabschnitt begrenzt sein.

Der Anschlagkanal durchsetzt den Sockel durchgängig bevorzugt in Richtung senkrecht zu der von der Ringöffnung aufgespannten Ebene.

Das wenigstens eine Formschlusselement an der wenigstens einen Seitenwand kann dazu genutzt werden, ein Verschlusselement in den Anschlagkanal einsetzen und formschlüssig halten zu können. Um möglichst hohe Lasten übertragen zu können, sind bevorzugt beide Seitenwände mit wenigstens einem Formschlusselement versehen.

Das wenigstens eine Formschlusselement kann wenigstens eine Sperrfläche mit einer in einer Belastungsrichtung, in der das Ringelement im Betrieb beaufschlagt wird, verlaufenden Normalenrichtung aufweisen. Durch die Sperrfläche kann über das Formschlusselement eine auf das Ringelement wirkende Last aufgenommen werden. Bevorzugt ist das wenigstens eine Formschlusselement mit wenigstens einem Paar von umgekehrt orientierten Sperrflächen versehen, um in beiden Richtungen Lasten aufnehmen zu können, die in der Ebene der Ringöffnung wirken.

Das wenigstens eine Formschlusselement bzw. die wenigstens eine Sperrfläche kann sich ferner vorzugsweise quer zur Ebene der Ringöffnung durchgängig entlang einer Seitenwand erstrecken. Auf diese Weise kann das Formschlusselement oder die Sperrfläche eine Führung bilden, entlang der ein Verschlusselement quer zur Ebene der Ringöffnung in den Anschlagkanal einschiebbar ist.

Eine Umfangsfläche des Sockels kann mit einer umlaufenden Rille versehen sein. Gegenüber der zur Zentrierung dienenden Umfangsfläche kann diese Umfangsfläche einen geringeren Durchmesser aufweisen. Sie kann ferner einen größeren Abstand vom Ringabschnitt aufweisen als die zur Zentrierung oder Lagerung dienende Umfangsfläche. Die Rille kann als Formschlusselement dienen, mit dem der Sockel an der Last befestigt ist. Zusätzlich oder alternativ kann die Rille auch als Lauffläche für Wälzkörper ausgestaltet sein, so dass der Sockel drehbar gelagert werden kann. Die Rille kann hierzu einen abgerundeten Grund aufweisen, der gehärtet und/oder poliert ist.

Der Sockel weist einen Zapfen auf, der zur Befestigung des Ringelements dient und sich vom Ringabschnitt weg erstreckt. Der Zapfen ist mit einem Befestigungselement versehen. Dieses kann ein Gewinde und/oder Stiftaufnahmen sein. Als Befestigungselement kann aber auch eine als Lauffläche eines Wälzlagers dienende Rille verwendet werden, beispielsweise wenn die in der Rille laufenden Wälzkörper einen Formschluss in Richtung der Rotationsachse des Wälzlagers erzeugen.

Um auch große auf das Ringelement wirkende Kräfte aufzunehmen, kann das Ringelement durch zwei unterschiedlich weit vom Ringabschnitt beabstandete, vorzugsweise konzentrische Lager abgestützt sein. Um Scherkräfte besser abzustützen, kann das näher am Ringabschnitt liegende Lager einen größeren Durchmesser aufweisen; insbesondere dieses Lager kann auch als Gleitlager ausgebildet sein. Das Gleitlager kann einen separaten Gleitlagerring aufweisen, der auch das Verschlusselement umschließt und gleichzeitig zur Sicherung des Verschlusselements dient. Wie oben bereits ausgeführt ist, kann sich das Gleitlager an einer Umfangsfläche des Sockels befinden. Der Gleitlagerring kann einen Presssitz aufweisen.

Ein Zurr- oder Anschlagmittel, das ein Ringelement in einer der obigen Ausgestaltungen aufweist, kann vorteilhaft mit einem in den Anschlagkanal einsetzbaren Verschlusselement versehen sein, dessen Seitenflächen komplementär zu dem Anschlagkanal ausgestaltet sind. Durch das Verschlusselement wird der Anschlagkanal geschlossen.

Insbesondere kann das Verschlusselement mit wenigstens einem Formschlusselement versehen sein, das komplementär zu dem wenigstens einen Formschlusselement des Anschlagkanals geformt ist. Das Formschlusselement des Verschlusselements kann insbesondere mit wenigstens einer Sperrfläche an den Seitenflächen versehen sein.

Wenigstens eine Seitenfläche des Verschlusselements und wenigstens eine Seitenwand des Anschlagkanals können bereichsweise zusammen eine Längsführung bilden, durch die das Verschlusselement in Richtung senkrecht zu der Ebene der Ringöffnung verschieblich geführt ist. Die Längsführung kann eine Sperrfläche umfassen.

Die Formschlusselemente von Anschlagkanal und Verschlusselement können insbesondere komplementär zueinander ausgestaltete Nuten, Rippen, Wulste und/oder Vorsprünge aufweisen, die sich quer zu der vom Ringabschnitt aufgespannten Ebene erstrecken.

Anstelle von oder zusätzlich zu Formschlusselementen können auch andere Befestigungsmittel zur Anbringung des Verschlusselements am Ringelement vorgesehen sein. Beispielsweise können die Seitenwände des Anschlagkanals Gewindeabschnitte aufweisen, in die ein Verschlusselement von der vom Ringabschnitt abgewandten Seite her einschraubbar ist. Außerdem ist es möglich, das Verschlusselement durch einen oder mehrere Stifte oder Bolzen im Anschlagkanal bzw. am Sockel zu sichern, ohne dass zusätzlich Formschlusselemente notwendig sind. Nachteilig bei diesen Lösungen erscheint jedoch der recht hohe Aufwand zum Verschließen und Öffnen des Anschlagkanals, der jedes Mal dann anfällt, wenn eine neue Schlaufe in die Ringöffnung eingelegt werden muss.

Das Verschlusselement kann an der vom Ringelement abgewandten Seite einen Zapfen aufweisen. Der Zapfen kann zur Lagerung und/oder Befestigung des Ringelements beziehungsweise des Zurr- oder Anschlagmittels an der Last dienen. Ist das Verschlusselement in das Ringelement eingesetzt, ragt der Zapfen aus dem Anschlagkanal hervor. Der Querschnitt des Zapfens ist bevorzugt prismatisch.

Der Zapfen kann auf einer Umfangsfläche, die insbesondere einen kreisförmigen Querschnitt aufweist, mit einer umlaufenden Rille und/oder Befestigungsmitteln, wie beispielsweise einem Gewinde, versehen sein. Die Rille kann als Lauffläche für Wälzkörper und/oder als Formschlusselement dienen.

Ist das Verschlusselement in den Anschlagkanal eingesetzt, so setzen Stirnflächen an sich gegenüberliegenden Enden des Verschlusselements vorzugsweise bündig eine Umfangsfläche des Sockels fort. Im eingesetzten Zustand des Verschlusselements weisen die endseitigen Stirnflächen bevorzugt in Richtung quer zur Ebene der Ringöffnung.

Die Stirnflächen können zwei sich diametral gegenüberliegende Abschnitte jeweils einer Zylindermantelfläche bilden. Im eingesetzten Zustand komplimentieren diese Stirnflächen bevorzugt eine zylindermantelförmige Umfangsfläche des Sockels. Es soll vorteilhaft eine durchgängige, kreisförmige Zylindermantelfläche entstehen, die als Zentrier- oder Lagerfläche dienen kann. Der Durchmesser der Zylindermantelfläche kann größer als der Durchmesser des Zapfens sein.

In einer weiteren vorteilhaften Ausgestaltung kann das Zurr- oder Anschlagmittel mit einer Befestigungshülse versehen sein, die einen Befestigungsabschnitt zur Anbringung an einer Last oder einem Hebezeug und an der vom Befestigungsabschnitt abgewandten Seite einen eine Aufnahme umgebenden Kragen aufweist. Die Aufnahme ist bevorzugt komplementär zum Sockel des Ringelements ausgestaltet.

Die Befestigungshülse kann formschlüssig mit dem Ringelement und/oder dem Verschlusselement verbunden sein. Formschlusselemente können insbesondere die Wälzkörper eines Lagers sein, welche das Ringelement drehbar an der Befestigungshülse halten.

Der Kragen kann wenigstens abschnittsweise die in Richtung quer zur Ebene der Ringöffnung gelegenen Enden des Anschlagkanals überdecken. Durch den Kragen kann das Verschlusselement im Anschlagkanal gehalten werden, ohne dass es in Richtung quer zur Ebene der Ringöffnung herausfallen kann.

Ist das Ringelement in der Befestigungshülse mittels eines Gleitlagers drehbar, so kann anstelle des Kragens auch ein Gleitlagerring zur Sicherung des Verschlusselements vorgesehen sein. Durch den Gleitlagerring können auch geringe Oberflächenvorsprünge zwischen Verschlusselement und Ringelement toleriert werden.

Das Ringelement kann lediglich mittelbar über das zwischenliegende Verschlusselement, insbesondere dessen Zapfen, an der Befestigungshülse befestigt sein. Dies erlaubt es, ein Baukastensystem mit gegeneinander austauschbaren Modulen zu bilden, bei dem verschiedene Ring- und/oder Verschlusselemente mit einer einzigen Bauform einer Befestigungshülse und/oder unterschiedlichen Bauformen von Befestigungshülsen mit einer Bauform von Ring- und/oder Verschlusselementen verbunden werden können.

Das Zurr- oder Anschlagmittel kann gemäß einer weiteren Ausgestaltung zusätzlich zum Ringelement ein Verbindungsglied aufweisen. Das Verbindungsglied kann aus einer Textilfaser gewirkt oder gewebt sein und eine Schlaufe bilden, die durch den Anschlagkanal hindurch in die Ringöffnung eingeführt wird. Andere Verbindungsglieder, die ebenfalls Verwendung finden können, sind beispielsweise Ringglieder, Ösenhaken oder Schäkel. Bei den letztgenannten Verbindungsgliedern aus Starrkörpern kann der Anschlagkanal genutzt werden, um eine verlier- und fehlbedienungssichere Paarung des Ringelements mit dem Verbindungsglied zu ermöglichen. Auf diese Weise kann verhindert werden, dass ein Verbindungsglied und ein Ringelement miteinander verwendet werden, die von ihren Festigkeitsklassen bzw. zugelassenen Belastungen nicht zueinander passen und aus Gründen der Arbeitssicherheit auch nicht miteinander verwendet werden dürfen.

Auf einfache Weise kann dies dadurch erreicht werden, dass das Verbindungsglied mit einer Abflachung versehen ist. Damit Abflachung und Anschlagkanal eine Fehlstecksicherung bilden, kann gemäß einer möglichen Ausgestaltung die Abflachung komplementär zum Anschlagkanal ausgestaltet sein.

Eine weitere Ausgestaltung kann vorsehen, dass das Verbindungsglied mit einer durch den Anschlagkanal in die Ringöffnung einführbaren Abflachung versehen ist. Im in die Ringöffnung eingeführten Zustand kann das Verbindungsglied entlang des Ringabschnitts um die Ringöffnung schwenkbar ausgestaltet sein. Die Beweglichkeit des Verbindungsgliedes bei dieser Ausgestaltung erlaubt es, sich an unterschiedliche Belastungsrichtungen anzupassen.

Das Verbindungsglied lässt sich außerhalb der Abflachung bevorzugt nicht in den Anschlagkanal und/oder die Ringöffnung einführen.

Die Funktion des Anschlagkanals des Ringelements mit komplementärer Abflachung des Verbindungsglieds als Fehlstecksicherung kann dadurch verbessert werden, dass gemäß einer weiteren Ausgestaltung das Verbindungsglied nur in einer einzigen Relativstellung von Verbindungsglied und Ringelement in das Ringelement eingeführt werden kann. Eine Möglichkeit, diese Funktionalität zu erreichen, besteht darin, dass die lichte Weite, insbesondere die lichte Weite im Anschluss an die Abflachung, des Verbindungsgliedes kleiner ist als die Gesamthöhe des Ringelements. Die Gesamthöhe des Ringelements ist dabei in Richtung des Anschlagkanals zur Ringöffnung hin, also entlang einer Einführrichtung, gemessen. Das Verbindungsglied kann so lediglich mit der Außenkante der Abflachung voran in den Anschlagkanal eingeführt werden.

Eine weitere Ausgestaltung kann vorsehen, dass eine lichte Weite des Verbindungsgliedes größer ist als die größte Breite des Ringelements. Die lichte Weite kann dabei senkrecht zu der lichten Weite im Anschluss an die Abflachung gemessen sein. Die größte Breite wird dabei senkrecht zu der von der Ringöffnung aufgespannten Ebene, also senkrecht zur größten Höhe bemessen.

Des Weiteren kann vorgesehen sein, dass das Verbindungsglied in der Ringöffnung von einer Einführstellung, in der die Abflachung in der Ringöffnung gegenüber dem Anschlagkanal liegt, in eine Betriebsstellung, in der die Abflachung aus der Ringöffnung bewegt ist, drehbar gehalten ist. Auch diese Maßnahme führt zu einer Fehlstecksicherung, da nur Verbindungsglieder verwendet werden können, die dieser geometrischen Vorgabe entsprechen. Ein weiterer Vorteil bei dieser Ausgestaltung liegt darin, dass in der Betriebsstellung, in der das Verbindungsglied belastet wird, die Abflachung nicht in Kontakt mit dem Ringelement liegt. Dies bedeutet eine höhere Beweglichkeit des Verbindungsgliedes in der Ringöffnung, weil die Abflachung die Beweglichkeit einschränken würde.

Im Folgenden ist die Erfindung anhand von unterschiedlichen Ausführungsformen mit Bezug auf die beigefügten Figuren beispielhaft näher erläutert. Die bei den einzelnen Ausführungsformen unterschiedlichen Merkmale können nach Maßgabe der obigen Beschreibung beliebig miteinander kombiniert oder weggelassen werden, wenn bei einer Anwendung der mit einem Merkmal verknüpfte Vorteil wichtig ist oder nicht gebraucht wird.

Es zeigen:
- Fig. 1: eine schematische Vorderansicht einer ersten beispielhaften Ausführungsform eines erfindungsgemäßen Ringelements;
- Fig. 2: eine schematische Seitenansicht des Ringelements der Fig. 1;
- Fig. 3: eine schematische Seitenansicht einer ersten Ausführungsform eines erfindungsgemäßen Zurr- oder Anschlagmittels mit einem gegenüber der Fig. 1 leicht abgewandelten Ringelement;
- Fig. 4: eine schematische Schnittansicht entlang der Linie IV-IV der Fig. 4;
- Fig. 5: eine schematische Schnittansicht entlang der Linie V-V der Fig. 4;
- Fig. 5A: ein Detail A der Fig. 5;
- Fig. 6: eine schematische Perspektivdarstellung einer weiteren Ausführungsform eines erfindungsgemäßen Ringelements mit einem Verschlusselement und einem Verbindungselement sowie einem Verbindungsglied;
- Fig. 7: eine weitere schematische Perspektivdarstellung der Anordnung der Fig. 6 mit montierter Befestigungshülse;
- Fig. 8: eine schematische Perspektivdarstellung einer weiteren Ausführungsform eines erfindungsgemäßen Ringelements mit einem Verschlusselement, einem Verbindungselement sowie einem Schäkel;
- Fig. 9: eine schematische Perspektivdarstellung einer weiteren Ausführungsform eines erfindungsgemäßen Ringelements mit einem Verschlusselement, einem Verbindungselement sowie einer Textilschlinge;
- Fig. 10: eine schematische Perspektivdarstellung einer weiteren Ausführungsform eines erfindungsgemäßen Ringelements ohne Verschlusselement und Verbindungselement und mit einem Ösenhaken.

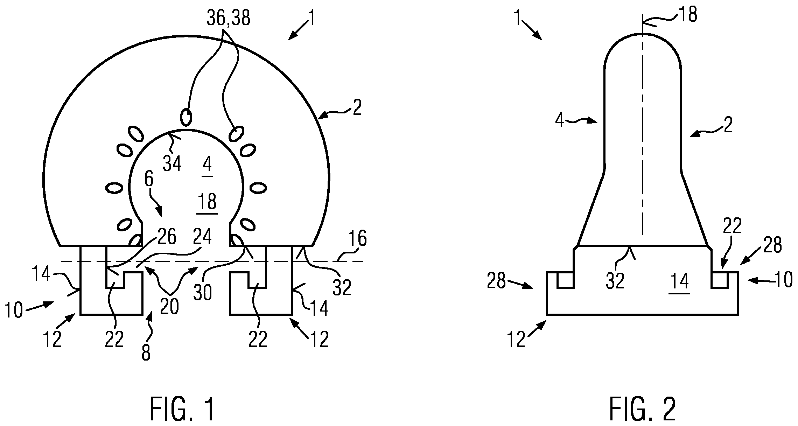

Zunächst ist der Aufbau eines Ringelements 1 mit Bezug auf die Fig. 1 und 2 beschrieben. Das Ringelement 1 dient insbesondere zur Befestigung von Rundschlingen aus hochfesten Textilfasern wie beispielsweiseultrahochmolekulargewichtiges Polyethylen (UHMWPE).

Das Ringelement 1 weist einen Ringabschnitt 2 auf, der eine Ringöffnung 4 aufspannt. An einem unteren, befestigungsseitigen Bereich 6 ist der Ringabschnitt 2 offen. An dieser Stelle mündet ein Anschlagkanal 8 in die Ringöffnung. Der Anschlagkanal ist last- oder hebezeugseitig offen und erstreckt sich durchgängig quer zur Ringöffnung 4. Ein Sockel 10 dient zur mittel- oder unmittelbaren Befestigung des Ringelements 1 an einem (nicht dargestellten) Hebezeug, einer (nicht dargestellten) Last oder einem (nicht dargestellten) Zurrmittel wie einem Kettenspanner. Der Sockel 10 ist durch den Anschlagkanal 8 geteilt. Gegenüberliegend dem Sockel 10 ist der Ringabschnitt 2 geschlossen.

Der Sockel 10 kann, wie Fig. 1 zeigt, zwei Hälften 12 aufweisen, die backenförmig sein können. Eine Umfangsfläche 14 des Sockels 10 bildet bevorzugt zumindest abschnittsweise eine Mantelfläche eines Kreiszylinders, insbesondere in einem Querschnitt 16, der senkrecht zu einer von der Ringöffnung 4 aufgespannten Ebene 18 verläuft. Die Umfangsfläche 14 kann zur Zentrierung und/oder drehbaren Lagerung des Ringelements genutzt werden und unmittelbar an den Ringabschnitt 2 angrenzen.

Die sich gegenüberliegenden Seitenwände 20 des Anschlagkanals 8 sind mit wenigstens einem Formschlusselement 22 versehen. Das Formschlusselement 22 kann, wie dargestellt, eine hinterschnittene Nut 24 umfassen, deren Grund 26 zum Anschlagkanal 8 weist. An den in Richtung quer zur Ebene 18 gelegenen Enden 28 des Ringelements 1 sind der Anschlagkanal 8 und die Nut 24 offen, so dass sie von den Enden 25 her bestückbar sind.

Die beiden Seitenwände 20 des Anschlagkanals 8 können mit identischen Formschlusselementen 22 versehen sein. Eine Wand 30 der Nut 24 kann von einer Bodenfläche 32 des Ringabschnitts 2 gebildet sein. Die Bodenfläche 32 ist bevorzugt plan.

Der Ringabschnitt 2 ist bevorzugt geschmiedet, der Anschlagkanal 2 kann durch ein spanabhebendes Verfahren hergestellt sein. Zur Ringöffnung 4 hin ist der Ringabschnitt 2 ballig geformt. Im Bereich eines Rands 34 der Ringöffnung 4 können Markierungen 36 in Form von Vertiefungen 38 vorgesehen sein. Die Markierungen 36 sind an bestimmten Winkelstellungen um die Ringöffnung 4 herum angebracht. Mit Hilfe der Markierungen 36 kann die Lage des Zurr- oder Anschlagmittels optisch durch Bedienpersonal festgestellt werden. So kann schnell überprüft werden, ob das Ringelement 1 innerhalb der erlaubten Belastungsrichtungen benutzt wird.

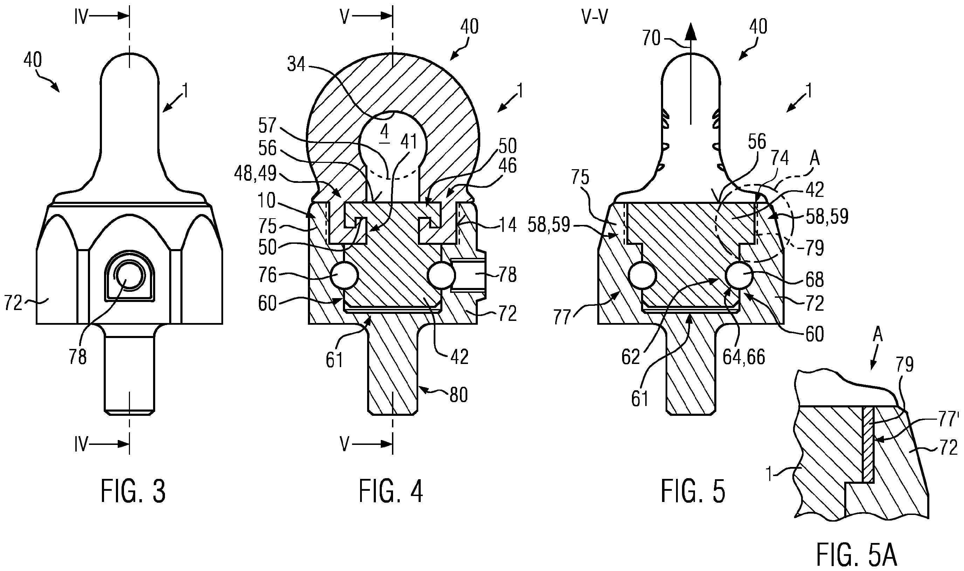

Die Fig. 3 bis 5 zeigen, wie das Ringelement 1 als Teil eines Zurr- oder Anschlagmittels 40 eingesetzt werden kann.

Hierzu kann das Ringelement durch ein Verschlusselement 42 ergänzt sein, das in den Anschlagkanal 8 einsetzbar ist. Seitenflächen 44 des Verschlusselements 42 können an seinem dem Ringelement 1 zugewandten Ende 46 zumindest bereichsweise komplementär zu den Seitenwänden 20 des Anschlagkanals 8 ausgebildet sein. Insbesondere kann das Verschlusselement 42 Formschlusselemente 48 aufweisen, die komplementär zu den Formschlusselementen 22 des Sockels 10 ausgestaltet sind.

Bei der dargestellten Ausführungsform bilden die Formschlusselemente 22, 48 eine Geradführung 49, entlang der das Verschlusselement 42 in den Anschlagkanal 8 in Richtung quer zur Ebene 18 der Ringöffnung 4 verschieblich ist. Bei vollständig eingeführtem Verschlusselement 42 ist der Anschlagkanal 8 verschlossen, wie Fig. 4 und 5 zeigen.

Das Formschlusselement 22 und das Formschlusselement 48 weisen jeweils Sperrflächen 50 auf, deren Normalenrichtung entlang einer Richtung verläuft, in der Sockel 10 und Ringabschnitt 2 bzw. Ringabschnitt 2 und Sockel 10 aufeinanderfolgen.

Eine Oberseite 56 des Verschlusselements 42 ist im eingesetzten Zustand des Verschlusselements 42 von der Ringöffnung 4 aus zugänglich. Die Oberseite 56 kann bis an die Ringöffnung 4 heranreichen und bündig mit deren Rand 34 abschließen, so dass bei eingesetztem Verschlusselement die Ringöffnung 4 kreisförmig ist. Dies ist durch die gestrichelte Linie 57 in Fig. 4 angedeutet.

An seinem der Ringöffnung 4 zugewandten Ende 46 weist das Verschlusselement 42 zwei Stirnflächen 58 an den sich gegenüberliegenden Enden 59 auf, die Abschnitte der Mantelfläche eines Kreiszylinders bilden. Bei eingesetztem Verschlusselement 42 sind die Stirnflächen 58 bevorzugt bündig mit der Umfangsfläche 14 des Sockels 10 des Ringelements 1 angeordnet. Auf diese Weise entsteht im Bereich des Sockels 10 eine durchgängige, bevorzugt stoßfreie Umfangsfläche, die zur Zentrierung und/oder drehbaren Lagerung der aus Ringelement 1 und Verschlusselement 42 zusammengesetzten Anordnung dient.

Das Verschlusselement 42 kann ferner mit einem Zapfen 60 versehen sein, der an dem vom Ringelement 1 bzw. von der Oberseite 56 abgewandten Ende 61 des Verschlusselements 42 vorragt. Der Zapfen 60 ist bevorzugt kreiszylinderförmig, kann jedoch aber auch andere prismatische Formen annehmen. Sein Durchmesser ist bevorzugt kleiner als der Durchmesser der Umfangsfläche 14. Der Zapfen 60 dient zur last- oder hebezeugseitigen Befestigung des Verschlusselements 42 und, über die Formschlusselemente 22, 48 mittelbar des Ringelements 1. Im eingesetzten Zustand des Verbindungselements ragt der Zapfen 60 aus dem Anschlagkanal 8.

Der Zapfen 60 kann mit Befestigungselementen 62 versehen sein, so dass er an einem entsprechend komplementär ausgestalteten last- oder hebezeugseitigen Träger angebracht werden kann. Bei den Ausführungsbeispielen ist das Befestigungselement 62 in Form einer umlaufenden Rille 64 ausgestaltet. Die Rille 64 kann einen abgerundeten Grund 66 aufweisen und als Lauffläche für Wälzkörper 68 dienen. Über die Wälzkörper 68 als Verbindungselemente kann ein Formschluss hergestellt werden, der das Verschlusselement 42 in einer Belastungsrichtung 70 sperrt und gleichzeitig eine Drehbewegung des Zapfens 60 und mit ihm verbundenen Ringelements 1 zulässt. Der Zapfen kann aber auch als Gewindezapfen ausgestaltet sein.

Das Zurr- oder Anschlagmittel 40 kann schließlich noch eine Befestigungshülse 72 aufweisen, die komplementär zum Sockel 10 und/oder Abschnitten des Verschlusselements 42 ausgebildet sein kann. Insbesondere kann die Befestigungshülse 72 eine innere Aufnahme 74 aufweisen, in der der Sockel 10 bzw. dessen Umfangsfläche 14 aufnehmbar ist. Im zusammengesetzten Zustand liegt die Befestigungshülse 72 bevorzugt an der Umfangsfläche 14 an. Sie überdeckt mit einem Kragen 75 den Anschlagkanal 8 in Richtung quer zur Ebene 18 und sichert dadurch das Verschlusselement 42 im Anschlagkanal 8 unverlierbar. Der Kragen 75 nimmt die Umfangsfläche 14 auf.

In der Aufnahme 74 kann zusätzlich auch der Zapfen 60 aufgenommen und befestigt sein. Die Aufnahme 74 kann eine zur Rille 64 und den Wälzkörpern 68 komplementäre Lagerrille 76 umfassen und so zusammen mit dem Zapfen 60 ein Drehlager 77 bilden. Um die Wälzkörper 68 nach dem Einsetzen des Zapfens 60 zusammen mit dem Ringelement 1 in die Aufnahme 74 einfüllen zu können, kann die Befestigungshülse 72 mit einer in die Aufnahme 74 reichenden Einfüllöffnung 78 versehen sein.

Die Umfangsfläche 14 des Sockels 10 kann in einem Gleitlagerring 79 aufgenommen sein, um die Reibung zwischen der Befestigungshülse 72 und dem Ringelement 1 zu verringern. Der Gleitlagerring sichert gleichzeitig das Verschlusselement 42 im Anschlagkanal 8. Der Gleitlagerring 79 liegt sowohl am Ringelement 1 als auch am Verschlusselement 42 an.

Fig. 5A zeigt das Detail A der Fig. 5. Der Gleitlagerring 79 sitzt bevorzugt in einem Presssitz auf der Umfangsfläche 14. Zusammen mit dem Drehlager 77 bildet das Gleitlager 77' eine Momentenstütze, die Kraftkomponenten quer zur Belastungsrichtung 70 aufnehmen.

Das Gleitlager 77' befindet sich bevorzugt näher an der Ringöffnung 4 als das Wälzlager 77. Es kann zudem einen größeren Durchmesser aufweisen als das Wälzlager 77, um Seitenkräfte an einer größeren Fläche abstützten zu können.

Die Befestigungshülse 72 kann auf der vom Ringelement 1 abgewandten Seite mit einem weiteren, beispielsweise zapfen- oder becherförmigen Befestigungsabschnitt 80 zur last- oder hebezeugseitigen Befestigung versehen sein.

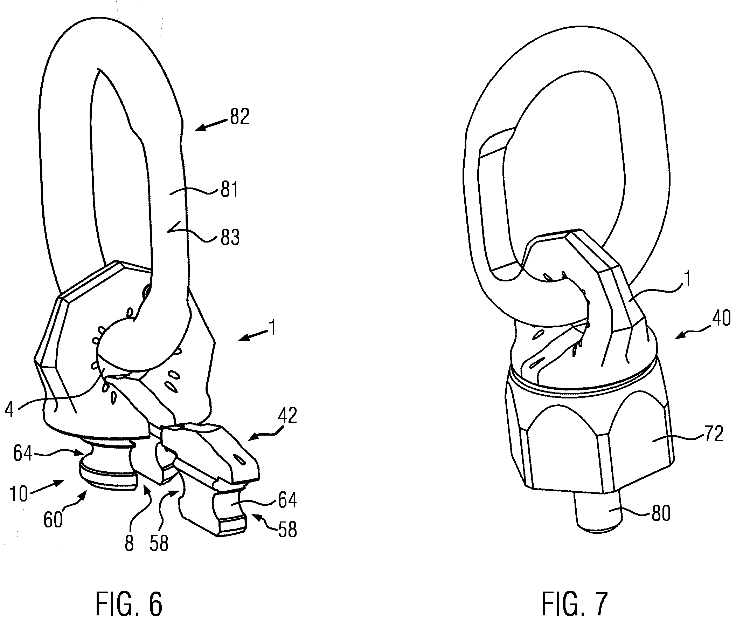

Eine weitere Möglichkeit, wie ein Ringelement 1 und ein Verschlusselement 42 ausgestaltet sein können, ist in den Fig. 6 und 7 gezeigt. Der Einfachheit halber ist im Folgenden lediglich auf die Unterschiede zu dem vorangegangen Ausführungsbeispiel eingegangen.

Bei der Ausgestaltung der Fig. 6 und 7 ist der Zapfen 60 Teil des Sockels 10 des Ringelements 1 und wie der Sockel 10 geteilt. Das Verschlusselement 42 ist, wie bei dem vorangegangen Ausführungsbeispiel formschlüssig und geradlinig in Richtung quer zur Ebene 18 (Fig. 2) in den Anschlagkanal 8 einschiebbar. Die Stirnflächen 58 des Verschlusselements 42 setzen die durch den Anschlagkanal 8 unterbrochene Umfangsfläche 14 des Sockels 10 und insbesondere auch die Umfangsfläche des Zapfens 60 möglichst stoß- und unterbrechungsfrei fort.

Ist das Verschlusselement 42 in den Anschlagkanal 8 eingesetzt, so kann das komplettierte Ringelement 1 auf dieselbe Weise in der Befestigungshülse 72 befestigt werden, wie im vorangegangenen Ausführungsbeispiel.

In Fig. 6 und 7 ist noch gezeigt, dass der Anschlagkanal 8 verwendet werden kann, um ein mit einer Abflachung 81 versehenes Verbindungsglied 82, hier ein Ringglied, in die Ringöffnung 4 zu überführen. Durch die Geometrie des Anschlagkanals 8 kann sichergestellt werden, dass nur ein dieser Geometrie entsprechendes Ringglied 82 in den Ringabschnitt 2 überführt werden kann. Der Anschlagkanal 8 und die komplementär zum Anschlagkanal 8 ausgebildete Abflachung 81 bilden eine Fehlstecksicherung. Durch die Fehlstecksicherung wird verhindert, dass beispielsweise ein Verbindungsglied 82 mit einem von seinen Festigkeitswerten unpassenden Ringelement 1 gepaart wird. Bevorzugt lässt sich das Verbindungsglied 82 in nur einer einzigen Stellung durch den Anschlagkanal 8 in die Ringöffnung 4 einführen, beispielsweise nur mit der Außenkante 83 der Abflachung voraus. Außerhalb der Abflachung 81 kann das Verbindungsglied nicht in den Anschlagkanal 8 und/oder die Ringöffnung 4 eingeführt werden.

Beim Aufbau des Zurr- oder Anschlagmittels 40 der Fig. 6 und 7 ist das Ringelement 1 unmittelbar in der Befestigungshülse 72 verankert, was einen direkteren Kraftfluss ermöglicht, als bei der mittelbaren Halterung des Ringelements 1 über das Verschlusselement 42 in der Befestigungshülse 72 beim Ausführungsbeispiel der Fig. 3 bis 5. Allerdings erfordert der Aufbau der Fig. 6 und 7 eine exakte Herstellung des Verschlusselements, damit in der Rille 64 am Übergang zwischen dem Verschlusselement 42 und dem Sockel 10 keine Absätze entstehen, die das Abrollen der Wälzkörper behindern.

Wird keine Drehlagerung des Sockels 10 gewünscht, kann einfach anstelle des Drehlagers 77 ein Spannstift, eine Schraube oder ein anderes Verbindungselement quer durch die Befestigungshülse 72 und den Zapfen 60 hindurchreichen, um Zapfen 60 und Befestigungshülse 72 miteinander starr zu verbinden.

Mit dem Ringelement 1, dem Verschlusselement 42 und der Befestigungshülse 72 kann ein modulares Baukastensystem aufgebaut werden, bei dem beispielsweise eine Befestigungshülse 72 für unterschiedliche Bauformen von Ringelementen 1 und Verschlusselementen 42 oder für eine Kombination eines Ringelements 1 und Verschlusselements 42 unterschiedliche Befestigungshülsen eingesetzt werden können.

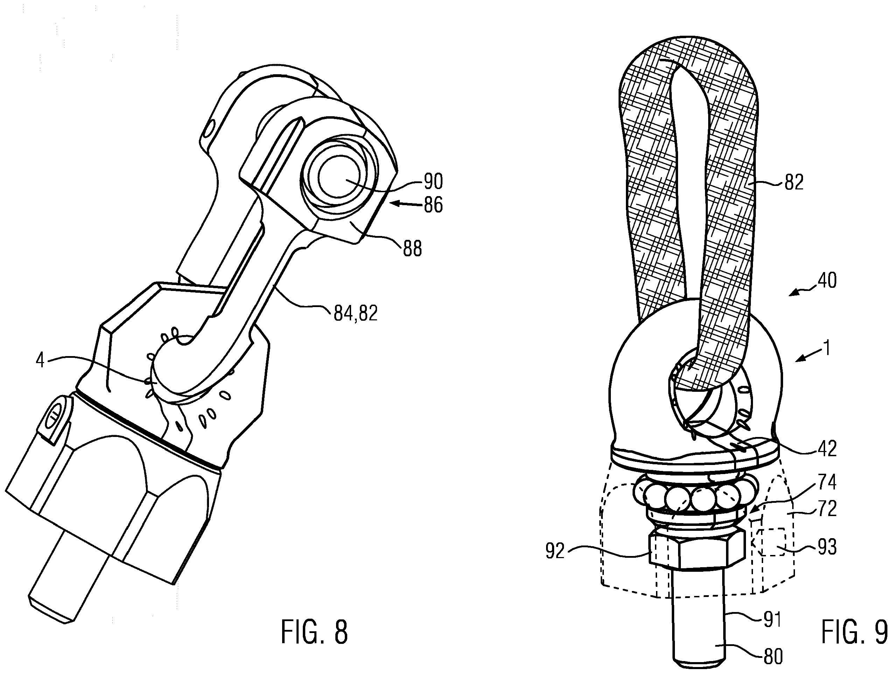

Fig. 8 zeigt das Zurr- oder Anschlagmittel 40 der Fig. 6 und 7 mit einem verliersicher in der Ringöffnung 4 gehaltenen Schäkel 84 als Verbindungsglied 82. Der Schäkel 84 weist an seinen Schenkelenden 86 zwei Köpfe 88 auf, die nicht durch die Ringöffnung 4 passen. Aufgrund der Abflachung 81 kann jedoch der Schäkel 84 bei entferntem Verschlusselement 42 durch den Anschlagkanal 8 in die Ringöffnung 4 überführt werden. Auf diese Weise wird verhindert, dass der sich zwischen den beiden Köpfen 88 erstreckende, verschraubte Schäkelbolzen 90 in die Ringöffnung 4 gelangen kann, wo er sich bei Schwenkbewegungen lösen könnte.

Fig. 9 zeigt eine weitere Variante des Zurr- oder Anschlagmittels 40. Im Unterschied zu den vorangegangenen Ausführungsbeispielen weist die Befestigungshülse keinen integrierten Befestigungsabschnitt 80 auf. Vielmehr ist der Befestigungsabschnitt 80 Teil eines separaten Befestigungselements 91, hier einer Schraube. Der Befestigungsabschnitt 80 des Befestigungselements 91 ragt durch das untere Ende der Befestigungshülse 72. Der Schraubenkopf 92 kann formschlüssig in einer komplementär ausgestalteten Aufnahme 74 der Befestigungshülse 72 eingesetzt sein, so dass eine Drehung der Befestigungshülse 72 das Befestigungselement 91 mitdreht.

Das Verbindungsglied 82 ist in Fig. 9 eine Schlaufe bzw. Schlinge aus Textilmaterial, beispielsweise aus Dyneema. Sie wird, wie die Verbindungsglieder der vorherigen Ausführungsbeispiele durch den Anschlagkanal 10 eingesetzt, nachdem das Verschlusselement 42 vom Ringelement 1 entfernt wurde.

Fig. 9 zeigt eine Aufnahme 93 in der Befestigungshülse 72, in der ein Transponder zum Ein- und Auslesen von bauteilspezifischen Daten aufgenommen sein kann. Beispielsweise kann ein solcher RFID-Chip in die Aufnahme 93 eingeschlagen sein. Alternativ und zusätzlich können auch das Ringelement und/oder das Verschlusselement 42 mit Transpondern versehen sein.

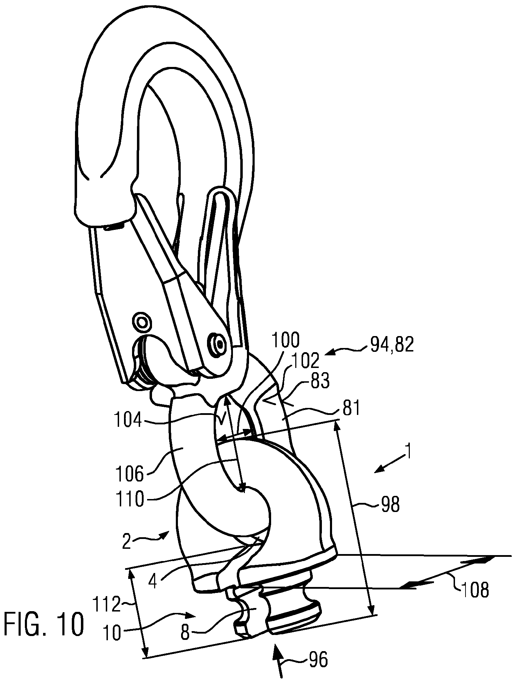

Fig 10 zeigt beispielhaft die Verwendung eines Ösenhakens 94 als Verbindungsglied 82. Die folgende Darstellung der Funktionsweise des Ösenhakens ist unabhängig von seiner Ausgestaltung und kann so auch für andere Formen von Verbindungsgliedern 82, beispielsweise dem Ringglied der Fig. 6 und 7 oder dem Schäkel der Fig. 8, verwendet werden.

Um eine hohe Sicherheit gegen Fehlbedienungen zu erlangen, lässt sich das Verbindungsglied 82, in Fig. 10 beispielsweise der Ösenhaken 94, nur in einer einzigen Relativstellung zum Ringelement 1 durch den Anschlagkanal 8 hindurch vollständig in die Ringöffnung 4 überführen. Bevorzugt wird das Verbindungsglied 82 mit der Außenkante 83 der Abflachung 81 voran in den Anschlagkanal überführt. Damit lediglich eine einzige derartige Einführstellung existiert, ist eine in der Ebene 18, vgl. Fig. 1, der Ringöffnung 4 und in der Richtung, in der sich der Anschlagkanal 8 in die Ringöffnung 4 öffnet, also in einer Einführrichtung 96 gemessene Höhe 98 des Ringelements 1 größer als eine sich an die Abflachung 81 anschließende lichte Weite 100 des Verbindungsgliedes 82. Bei einer solchen Ausgestaltung können die beiden ebenen Abschnitte 102 der Abflachung 82 bevorzugt parallel zu der von dem Verbindungsglied 82 aufgespannten Ebene 104 verlaufen.

Ist bei einer solchen Ausgestaltung die Abflachung 81 vollständig in der Ringöffnung 4 aufgenommen, so liegt der der Abflachung 81 gegenüberliegende Abschnitt 106 außerhalb des Ringelements 1 am Eingang zum Anschlagkanal 8.

Damit das Verbindungsglied 82 aus dieser Einführstellung in die in Fig. 6, 7, 8 und 10 gezeigten Betriebsstellung überführt werden kann, muss es zunächst entlang des Ringabschnitts 2 um die Ringöffnung 4 herum verschwenkt werden, so dass der außerhalb des Ringelements 1 liegende Abschnitt 106 des Verbindungsgliedes 82, der der Abflachung 81 gegenüber liegt, von seiner anfänglichen Lage am Anschlagkanal 8 in eine Position oberhalb des Ringabschnitts 2 bewegt ist. In dieser Zwischenposition befindet sich nicht mehr der Anschlagkanal 8 zwischen der Abflachung 81 und dem ihm gegenüberliegenden Bereich 106 des Verbindungsglieds 82, sondern der Ringabschnitt 2. In der Zwischenposition ist dann noch eine Drehung erforderlich mit einem Teil des Ringabschnitts als Drehachse, um die Abflachung 81 aus der Ringöffnung 4 heraus in die in Fig. 10 dargestellte Position zu verschwenken.

Bevorzugt ist die Geometrie des Ringelements 1 so ausgestaltet, dass die Schwenk- und die Drehbewegung nur getrennt voneinander erfolgen können. Dies kann beispielsweise dadurch erreicht werden, dass die lichte Weite 100 kleiner ist als eine größte Breite 108 des Ringelements im Bereich des Sockels 10 bzw. des an den Sockel 10 angrenzenden Bereichs des Ringabschnitts 2. Gleichzeitig ist eine lichte Weite 110 quer zur lichten Weite 100 des Verbindungsgliedes größer als die Breite 108. Dies ermöglicht ein Verschwenken des Verbindungsgliedes 82 entlang des Ringabschnitts 2 nur dann, wenn die Abflachung 81 sich in der Ringöffnung 4 befindet. Zudem sollte bei dieser Ausgestaltung eine Höhe 112 des Anschlagkanals 8 in Einführrichtung 96 kleiner sein als die lichte Weite 100.

Hat die größte Breite 98 das Verbindungsglied 82 passiert, kann die Abflachung 81 aus der Ringöffnung 4 gedreht, so dass sie das Ringelement 1 im Belastungsfall nicht berührt. Dies hat zur Folge, dass sich die Flächen von Verbindungsglied 82 und Ringelement 1 enger aneinander schmiegen können und somit die Flächenpressung reduzieren.

### Bezugszeichen

- 1: Ringelement
- 2: Ringabschnitt
- 4: Ringöffnung
- 6: last- oder hebezeugseitiger Bereich der Ringöffnung
- 8: Anschlagkanal
- 10: Sockel des Ringelements
- 12: backenförmige Hälften des Sockels
- 14: Umfangsfläche des Sockels
- 16: Querschnitt durch Umfangsfläche
- 18: Ebene der Ringöffnung
- 20: Seitenwand des Anschlagkanals
- 22: Formschlusselement des Sockels
- 24: Nut der Seitenwand
- 26: Grund der Nut
- 28: Enden der Nut
- 30: Wand der Nut
- 32: Bodenfläche des Ringabschnitts
- 34: Rand der Ringöffnung
- 36: Markierung
- 38: Vertiefung
- 40: Anschlagmittel
- 42: Verschlusselement
- 44: Seitenflächen des Verschlusselements
- 46: dem Ringelement zugewandtes Ende des Verschlusselements
- 48: Formschlusselement einer Seitenfläche
- 49: Geradführung
- 50: Sperrfläche der sockelseitigen und verschlusselementseitigen Formschlusselemente
- 56: Oberseite des Verschlusselements
- 57: Linie
- 58: Stirnflächen des Verschlusselements
- 59: Enden des Verschlusselements
- 60: Zapfen
- 61: zapfenseitiges Ende des Verschlusselements
- 62: Befestigungselemente
- 64: Rille
- 66: Grund der Rille
- 68: Wälzkörper
- 70: Belastungsrichtung
- 72: Befestigungshülse
- 74: Aufnahme der Befestigungshülse
- 75: Kragen
- 76: Lagerrille der Befestigungshülse
- 77: Drehlager
- 77': Gleitlager
- 78: Einfüllöffnung
- 79: Gleitlagerring
- 80: Befestigungsabschnitt der Befestigungshülse
- 81: Abflachung
- 82: Verbindungsglied
- 83: Außenkante der Abflachung
- 84: Schäkel
- 86: Schenkelenden des Schäkels
- 88: Kopf
- 90: Schäkelbolzen
- 91: Befestigungselement
- 92: Schraubenkopf
- 93: Transponderaufnahme
- 94: Ösenhaken
- 96: Einführrichtung
- 98: Höhe des Ringelements
- 100: lichte Weite
- 102: ebene Abschnitte der Abflachung
- 104: vom Verbindungsglied aufgespannte Ebene
- 106: der Abflachung gegenüberliegender Abschnitt des Verbindungsgliedes
- 108: größte Breite des Ringelements
- 110: lichte Weite des Verbindungsgliedes
- 112: Höhe des Anschlagkanals

## Patentansprüche

1. Ringelement (1) für ein Zurr- oder Anschlagmittel (40), mit einem Sockel (10) und einem gegenüberliegend dem Sockel (10) geschlossenen, eine Ringöffnung (4) aufspannenden Ringabschnitt (2), wobei der Sockel (10) durch einen in die Ringöffnung (4) mündenden Anschlagkanal (8) geteilt ist, wobei wenigstens eine der einander zugewandten Seitenwände (20) des Anschlagkanals (8) mit zumindest einem sich durchgängig entlang der Seitenwand (20) erstreckenden Formschlusselement (22) versehen ist, **dadurch gekennzeichnet, dass** der Sockel (10) einen Zapfen (60) mit einem Befestigungselement (62) aufweist.

2. Zurr- oder Anschlagmittel (40), **gekennzeichnet durch** ein Ringelement (1) nach Anspruch 1 und durch ein in den Anschlagkanal (8) einsetzbares Verschlusselement (42), dessen Seitenflächen wenigstens abschnittsweise komplementär zu dem Anschlagkanal (8) ausgestaltet sind.

3. Zurr- oder Anschlagmittel (40) nach Anspruch 2, **dadurch gekennzeichnet, dass** eine von wenigstens einer Seitenfläche (44) des Verschlusselements (42) und wenigstens einer Seitenwand (20) des Anschlagkanals (8) gebildete Geradführung (49) vorgesehen ist, durch die das Verschlusselement (42) in Richtung senkrecht zu der von der Ringöffnung (4) aufgespannten Ebene (18) verschieblich geführt ist.

4. Zurr- oder Anschlagmittel (40) nach Anspruch 2 oder 3, **dadurch gekennzeichnet, dass** das Verschlusselement (42) einen Zapfen (60) aufweist.

5. Zurr- oder Anschlagmittel (40) nach Anspruch 4, **dadurch gekennzeichnet, dass** der Zapfen (60) mit einem Befestigungselement (62) versehen ist.

6. Zurr- oder Anschlagmittel (40) nach Anspruch 5, **dadurch gekennzeichnet, dass** das Befestigungselement (62) eine um den Zapfen (60) laufende Rille (64) aufweist.

7. Zurr- oder Anschlagmittel (40) nach einem der Ansprüche 2 bis 6, **dadurch gekennzeichnet, dass** das Verschlusselement (42) mit zwei gegenüberliegenden, jeweils Abschnitte einer Zylindermantelfläche bildenden Stirnflächen (58) versehen ist.

8. Zurr- oder Anschlagmittel (40) nach einem der Ansprüche 2 bis 7, **dadurch gekennzeichnet, dass** das in den Anschlagkanal (8) eingeführte Verschlusselement (42) bündig mit wenigstens einer Umfangsfläche (14) des Sockels (10) abschließt.

9. Zurr- oder Anschlagmittel (40) nach einem der Ansprüche 2 bis 8, **dadurch gekennzeichnet, dass** Stimflächen (58) des Verschlusselements (42) die Umfangsfläche (14) des Sockels (10) zu einer vollständigen Zylindermantelfläche ergänzen.

10. Zurr- oder Anschlagmittel (40) insbesondere nach einem der Ansprüche 2 bis 9, **gekennzeichnet durch** ein Ringelement (1) nach Anspruch 1 und ein Verbindungsglied (82), das mit einer durch den Anschlagkanal (8) in die Ringöffnung (4) einführbaren Abflachung (81) versehen ist und dass in der Ringöffnung (4) eingeführt entlang des Ringabschnitts (2) um die Ringöffnung (4) herum schwenkbar ausgestaltetet ist.

11. Zurr- oder Anschlagmittel (40) nach Anspruch 10, **dadurch gekennzeichnet, dass** eine sich an die Abflachung (81) anschließende lichte Weite (100) des Verbindungsgliedes (82) kleiner ist als eine Gesamthöhe (98) des Ringelements (1).

12. Zurr- oder Anschlagmittel (40) nach Anspruch 10 oder 11, **dadurch gekennzeichnet, dass** das Verbindungsglied (82) in nur einer einzigen Relativstellung vom Verbindungsglied (82) und Ringelement (1) in die Ringöffnung (4) einführbar ausgestaltet ist.

13. Zurr- oder Anschlagmittel (40) nach einem der Ansprüche 10 bis 12, **dadurch gekennzeichnet, dass** das Verbindungsglied (82) in nur einer einzigen Relativstellung zum Ringelement (1) um die Ringöffnung (4) entlang des Ringabschnitts (2) schwenkbar ausgestaltet ist.

14. Zurr- oder Anschlagmittel (40) nach einem der Ansprüche 10 bis 13, **dadurch gekennzeichnet, dass** das Verbindungsglied (82) in der Ringöffnung (4) von einer Einführstellung, in der die Abflachung (81) in der Ringöffnung (4) liegt, in eine Betriebsstellung, in der die Abflachung (81) aus der Ringöffnung (4) bewegt ist, drehbar gehalten ist.

15. Verschlusselement (42) für ein Ringelement mit einem Anschlagkanal (8) nach Anspruch 1 und einem Sockel (10), **dadurch gekennzeichnet, dass** das Verschlusselement (42) in den Anschlagkanal (8) einsetzbar ausgestaltet ist und zwei Stirnflächen (58) aufweist, die im eingesetzten Zustand bündig mit der Umfangsfläche (14) des Sockels (10) abschließen.

## Claims

1. Ring element (1) for a lashing or attachment device (40) with a base (10) and a ring section (2) that is closed opposite to the base (10) and that opens up a ring opening (4), wherein the base (10) is divided by an attachment channel (8) that leads into the ring opening (4), wherein at least one of the side walls (20) of the attachment channel (8) that are facing one another is equipped with at least one form-fit element (22) that extends continuously along a side wall, **characterized in that** the base (10) has a pin (60) with a fastening element (62).

2. Lashing or attachment device (40), **characterized by** a ring element (1) according to Claim 1 and by a closing element (42) that is insertable into the attachment channel (8) and whose side surfaces are designed complementarily to the attachment channel (8) at least in a sectional way.

3. Lashing or attachment device (40) according to Claim 2, **characterized in that** a linear guiding (49), which is formed by at least one side area (44) of the closing element (42) and at least one side wall (20) of the attachment channel (8), is provided through which the closing element (42) is guided movably in the direction perpendicular to the plane (18) that is opened up by the ring opening (4).

4. Lashing or attachment device (40) according to Claim 2 or 3, **characterized in that** the closing element (42) has a pin (60).

5. Lashing or attachment device (40) according to Claim 4, **characterized in that** the pin (60) is equipped with a fastening element (62).

6. Lashing or attachment device (40) according to Claim 5, **characterized in that** the fastening element (62) has a groove (64) that extends around the pin (60).

7. Lashing or attachment device (40) according to one of the Claims 2 to 6, **characterized in that** the closing element (42) is equipped with front surfaces (58) that are opposite to one another and that respectively form sections of a cylinder surface area.

8. Lashing or attachment device (40) according to one of the Claims 2 to 7, **characterized in that** the closing element (42) inserted in the attachment channel (8) fits flush with at least one circumferential surface (14) of the base (10).

9. Lashing or attachment device (40) according to one of the Claims 2 to 8, **characterized in that** front surfaces (58) of the closing element (42) complement the circumferential surface (14) of the base (10) to a complete cylinder surface area.

10. Lashing or attachment device (40) in particular according to one of the Claims 2 to 9, **characterized by** a ring element (1) according to Claim 1 and a connecting link (82) that is equipped with a flattening (81), which is insertable through the attachment channel (8) into the ring opening (4), and that is designed so that it can be swiveled around the ring opening (4) along the ring section (2) while being inserted in the ring opening (4).

11. Lashing or attachment device (40) according to Claim 10, **characterized in that** a clear span (100) of the connecting link (82), which is adjacent to the flattened section (81), is smaller than an overall height (98) of the ring element (1).

12. Lashing or attachment device (40) according to Claim 10 or 11, **characterized in that** the connecting link (82) is formed such that it can only be inserted in the ring opening (4) in a single relative position of the connecting link (82) and the ring element (10).

13. Lashing or attachment device (40) according to one of the Claims 10 to 12, **characterized in that** the connecting link (82) is formed such that it can be swiveled around the ring opening (4) along the ring section (2) in only a single relative position to the ring element (1).

14. Lashing or attachment device (40) according to one of the Claims 10 to 13, **characterized in that** the connecting link (82) in the ring opening (4) is held rotatably from an inserting position, in which the flattened section (81) is located in the ring opening (4), to an operating position in which the flattened section (81) is moved out of the ring opening (4).

15. Closing element (42) for a ring element with an attachment channel (8) according to Claim 1 and a base (10) **characterized in that** the closing element (42) is formed such that it can be inserted in the attachment channel (8) and that it has two front surfaces (58) that fit flush with the circumferential surface (14) of the base (10) in the inserted state.

## Revendications

1. Elément d'anneau (1) pour un moyen d'amarrage ou d'accrochage (40), comprenant une embase (10) et un tronçon d'anneau (2) fermé en opposition à l'embase (10) en formant une ouverture d'anneau (4), l'embase (10) étant divisée par un canal d'accrochage (8) débouchant dans l'ouverture d'anneau (4), et l'une des surfaces latérales (20) du canal d'accrochage (8), dirigées l'une vers l'autre, étant pourvue d'au moins un élément de liaison par complémentarité de formes (22), qui s'étend de manière continue traversante le long de la paroi latérale (20), **caractérisé en ce que** l'embase (10) comporte un tourillon (60) avec un élément de fixation (62) .

2. Moyen d'amarrage ou d'accrochage (40) **caractérisé par** un élément d'anneau (1) selon la revendication 1, et par un élément de fermeture (42), qui peut être inséré dans le canal d'accrochage (8) et dont les surfaces latérales sont, au moins par tronçons, d'une configuration complémentaire au canal d'accrochage (8) .

3. Moyen d'amarrage ou d'accrochage (40) selon la revendication 2, **caractérisé en ce qu'**il est prévu un guide rectiligne (49), qui est formé par au moins une surface latérale (44) de l'élément de fermeture (42) et au moins une paroi latérale (20) du canal d'accrochage (8), et par lequel l'élément de fermeture (42) est guidé en coulissement dans une direction perpendiculaire au plan (18) défini par l'ouverture d'anneau (4).

4. Moyen d'amarrage ou d'accrochage (40) selon la revendication 2 ou la revendication 3, **caractérisé en ce que** l'élément de fermeture (42) présente un tourillon (60) .

5. Moyen d'amarrage ou d'accrochage (40) selon la revendication 4, **caractérisé en ce que** le tourillon (60) est muni d'un élément de fixation (62).

6. Moyen d'amarrage ou d'accrochage (40) selon la revendication 5, **caractérisé en ce que** l'élément de fixation (62) comprend une gorge (64) s'étendant autour du tourillon (60).

7. Moyen d'amarrage ou d'accrochage (40) selon l'une des revendications 2 à 6, **caractérisé en ce que** l'élément de fermeture (42) est muni de deux surfaces frontales (58) mutuellement opposées formant chacune respectivement un secteur de surface périphérique de cylindre.

8. Moyen d'amarrage ou d'accrochage (40) selon l'une des revendications 2 à 7, **caractérisé en ce que** l'élément de fermeture (42) ayant été inséré dans le canal d'accrochage (8) se termine au ras d'au moins une surface périphérique (14) de l'embase (10).

9. Moyen d'amarrage ou d'accrochage (40) selon l'une des revendications 2 à 8, **caractérisé en ce que** des surfaces frontales (58) de l'élément de fermeture (42) complètent la surface périphérique (14) de l'embase (10) en une surface périphérique complète de cylindre.

10. Moyen d'amarrage ou d'accrochage (40) notamment selon l'une des revendications 2 à 9, **caractérisé par** un élément d'anneau (1) selon la revendication 1 et un organe de liaison (82), qui est muni d'une zone de méplat (81) pouvant être insérée dans l'ouverture d'anneau (4) à travers le canal d'accrochage (8), et qui, une fois inséré dans l'ouverture d'anneau (4), est conçu de manière à pouvoir pivoter autour de l'ouverture d'anneau (4), le long du tronçon d'anneau (2).

11. Moyen d'amarrage ou d'accrochage (40) selon la revendication 10, **caractérisé en ce qu'**une largeur d'ouverture libre (100) de l'organe de liaison (82), qui se raccorde à la zone de méplat (81), est inférieure à une hauteur totale (98) de l'élément d'anneau (1).

12. Moyen d'amarrage ou d'accrochage (40) selon la revendication 10 ou la revendication 11, **caractérisé en ce que** l'organe de liaison (82) est d'une configuration ne permettant de l'insérer dans l'ouverture d'anneau (4) que dans une seule position relative de l'organe de liaison (82) et de l'élément d'anneau (1).

13. Moyen d'amarrage ou d'accrochage (40) selon l'une des revendications 10 à 12, **caractérisé en ce que** l'organe de liaison (82) est d'une configuration lui permettant de pivoter autour de l'ouverture d'anneau (4) le long du tronçon d'anneau (2) uniquement dans une seule position relative par rapport à l'élément d'anneau (1).

14. Moyen d'amarrage ou d'accrochage (40) selon l'une des revendications 10 à 13, **caractérisé en ce que** l'organe de liaison (82) est maintenu dans l'ouverture d'anneau (4) de manière à pouvoir être tourné d'une position d'insertion, dans laquelle la zone de méplat (81) se situe dans l'ouverture d'anneau (4), à une position de service, dans laquelle la zone de méplat (81) a été déplacée hors de l'ouverture d'anneau (4).

15. Elément de fermeture (42) pour un élément d'anneau comportant un canal d'accrochage (8) selon la revendication 1, et une embase (10), **caractérisé en ce que** l'élément de fermeture (42) est d'une configuration permettant son insertion dans le canal d'accrochage (8), et présente deux surfaces frontales (58), qui, dans l'état inséré, arrivent au ras de la surface périphérique (14) de l'embase (10).
